# FASCICULE DE BREVET EUROPEEN

(11) **EP 3 680 176 B1**
(45) Date de publication et mention de la délivrance du brevet: **14.04.2021**
(21) Numéro de dépôt: 20150300.0
(22) Date de dépôt: 06.01.2020
(51) Int. Cl.: B64D 27/26

(54) **ATTACHE-MOTEUR D'AÉRONEF COMPRENANT AU MOINS UN SYSTÈME D'IMMOBILISATION EN TRANSLATION D'UN PION DE CISAILLEMENT COMPORTANT UNE PLAQUE D'OBTURATION, PROCÉDÉ DE MONTAGE DE LADITE ATTACHE-MOTEUR ET AÉRONEF COMPRENANT LADITE ATTACHE-MOTEUR**
ANTRIEBSAUFHÄNGUNG BEINHALTEND ZUMINDEST EIN BLINDPLATTEFIXIERUNGSSYSTEM FÜR EINEN SCHERSTIFT, MONTAGEVERFAHREN EINER SOLCHEN AUFHÄNGUNG UND FLUGZEUG BEINHALTEND EINE SOLCHE AUFHÄNGUNG
ENGINE MOUNTING STRUCTURE COMPRISING AT LEAST A TRANSLATION FIXING SYSTEM OF A SHEAR PIN COMPRISING A BLANKING PLATE, MOUNTING METHOD OF SUCH A STRUCTURE AND AIRCRAFT COMPRISING SUCH A STRUCUTRE

(30) Priorité: 09.01.2019 FR 1900203
(43) Date de publication de la demande: 15.07.2020
(73) Titulaire: AIRBUS OPERATIONS (S.A.S.), 31060 Toulouse (FR)
(72) Inventeur: DEFORET, Thomas, 31060 TOULOUSE Cedex 9 (FR); PUECH, Jacky, 31060 TOULOUSE Cedex 9 (FR); CAYSSIALS, Julien, 31060 TOULOUSE Cedex 9 (FR)
(74) Mandataire: Gicquel, Olivier Yves Gérard

(56) Documents cités:
- FR-A1- 2 891 254
- US-A- 4 943 013
- US-A- 5 649 417

## Description

La présente demande se rapporte à une attache-moteur d'aéronef comprenant au moins un système d'immobilisation en translation d'un pion de cisaillement comportant une plaque d'obturation, à un procédé de montage de ladite attache-moteur ainsi qu'à un aéronef comprenant ladite attache-moteur.

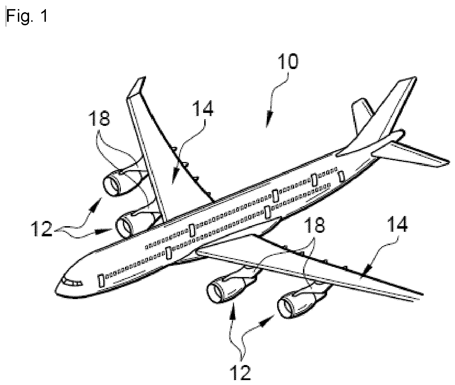

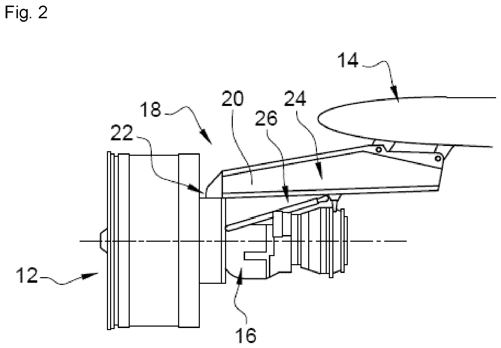

Selon une configuration visible sur les figures 1 et 2, un aéronef 10 comprend plusieurs ensembles moteurs 12 qui sont positionnés sous la voilure 14 de l'aéronef 10.

Un ensemble moteur 12 comprend un moteur 16, une nacelle (non représentée sur la figure 2) positionnée autour du moteur 16 et un mât 18 qui assure la liaison entre le moteur 16 et le reste de l'aéronef 10, notamment la voilure 14.

Le mât 18 comprend une structure primaire 20 qui est reliée au moteur 16 par une attache-moteur avant 22, une attache-moteur arrière 24 et un couple de bielles de poussée 26 qui assurent la reprise des efforts de poussée.

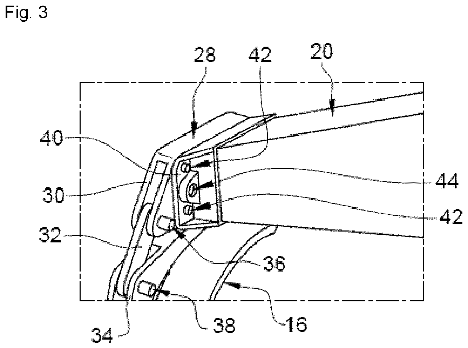

Selon un mode de réalisation visible sur la figure 3, l'attache-moteur avant 22 comprend un corps d'attache 28, relié au mât 18, qui présente deux chapes 30 disposées de part et d'autre du mât 18, ainsi que deux bielles 32 qui relient chacune l'une des chapes 30 du corps d'attache 28 à une chape 34 solidaire du moteur 16. Chaque bielle 32 est reliée à l'une des chapes 30 du corps d'attache 28 par un premier axe d'articulation 36 et à l'une des chapes 34 du moteur 16 par un deuxième axe d'articulation 38.

Selon un mode de réalisation illustré par le document FR2891245, la structure primaire 20 présente à l'avant deux pattes de fixation 40 qui s'étendent de part et d'autre de la structure primaire 20 et qui offrent une face de contact contre laquelle est plaquée une face de contact du corps d'attache 28. L'attache-moteur avant 22 comprend une liaison entre la structure primaire 20 et le corps d'attache 28 comportant, pour chaque patte de fixation 40, plusieurs boulons 42 traversant la patte de fixation 40 et le corps d'attache 28 ainsi qu'au moins un pion de cisaillement 44 qui se loge à cheval dans un premier trou ménagé dans la patte de fixation 40 et dans un deuxième trou ménagé dans le corps d'attache 28. Selon ce document, lors du montage, les pions de cisaillement sont introduits depuis chaque patte de fixation 40.

En fonctionnement, chaque pion de cisaillement 44 doit être immobilisé en translation dans les premier et deuxième trous.

Selon un mode de réalisation, chaque pion de cisaillement 44 comprend à une première extrémité un épaulement qui prend appui contre l'une des pattes de fixation 40. Pour empêcher la sortie du pion de cisaillement 44, une butée démontable est mise en place au niveau de la deuxième extrémité du pion de cisaillement 44. Ce mode de réalisation nécessite la présence d'un premier dégagement du côté de la patte de fixation 40, au droit du premier trou, pour permettre l'introduction du pion de cisaillement 44, et d'un deuxième dégagement du côté du corps d'attache 28, au droit du deuxième trou, pour permettre la mise en place de la butée démontable. Or, dans certains cas, par exemple pour les moteurs à haut taux de dilution de type UHBR (pour Ultra High By Pass Ratio en anglais), l'accès à l'avant du corps d'attache 28 est impossible.

La même problématique se pose pour l'attache moteur décrite dans le document FR2891254 qui décrit le préambule de la revendication 1.

La présente invention vise à remédier à tout ou partie des inconvénients de l'art antérieur.

A cet effet, l'invention a pour objet une attache-moteur d'aéronef tel que revendiqué à la revendication 1.

Ainsi, il est possible de monter chaque pion de cisaillement et ses systèmes d'immobilisation à partir seulement de la structure primaire. Ainsi, l'espacement entre le corps d'attache et le moteur d'aéronef peut être très réduit à l'avant du corps d'attache.

D'autres caractéristiques et avantages ressortiront de la description de l'invention qui va suivre, description donnée à titre d'exemple uniquement, en regard des dessins annexés parmi lesquels :
La figure 1 est une vue en perspective d'un aéronef,
La figure 2 est une représentation schématique d'un ensemble propulsif relié à une voilure qui illustre un mode de réalisation de l'art antérieur,
La figure 3 est une vue en perspective d'une attache-moteur avant d'un aéronef qui illustre un mode de réalisation de l'art antérieur,
La figure 4 est une vue en perspective d'une attache-moteur avant d'un aéronef à l'état démonté qui illustre un mode de réalisation de l'invention,
La figure 5 est une vue de côté d'une attache-moteur avant d'un aéronef à l'état assemblé qui illustre un mode de réalisation de l'invention,
La figure 6 est une vue en perspective d'une attache-moteur avant d'un aéronef à l'état assemblé qui illustre un mode de réalisation de l'invention, et
La figure 7 est une coupe selon la ligne VII-VII de la figure 6 d'une partie de l'attache-moteur avant visible sur la figure 6.

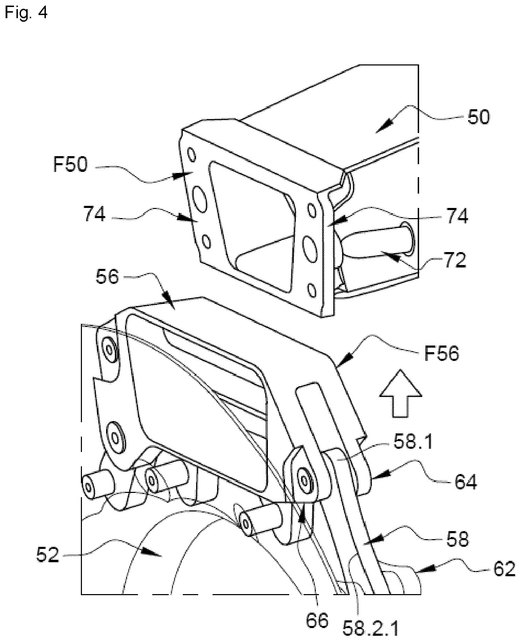

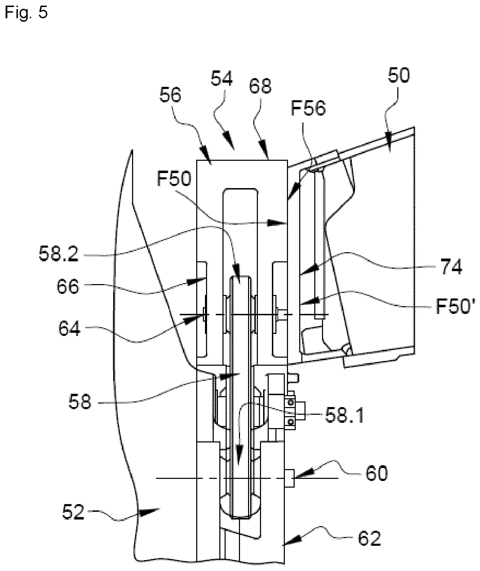

Selon un mode de réalisation illustré sur les figures 4 et 5, une structure primaire 50 d'un mât d'aéronef est reliée à un moteur d'aéronef 52 par une attache-moteur avant 54.

Pour la suite de la description, une direction longitudinale est une direction parallèle à l'axe de rotation du moteur d'aéronef 52. Un plan longitudinal vertical est un plan vertical passant par l'axe de rotation du moteur d'aéronef 52. Les termes « avant » et « arrière » font référence au sens d'écoulement du flux d'air à l'intérieur du moteur d'aéronef 52 en fonctionnement, le flux d'air s'écoulant de l'avant vers l'arrière. Les termes « horizontal » et « vertical » correspondent aux directions horizontale (perpendiculaire à la direction de la pesanteur) et verticale (parallèle à la direction de la pesanteur) lorsque l'aéronef est au sol.

Bien que décrite appliquée à une attache-moteur avant, l'invention n'est aucunement limitée à cette application et pourrait être utilisée pour les autres attaches-moteurs.

Selon une configuration, l'attache-moteur avant 54 comprend un corps d'attache 56, deux bielles 58, disposées de part et d'autre du plan longitudinal vertical, reliant chacune le corps d'attache 56 au moteur d'aéronef 52 ainsi que pour chaque bielle 58, un premier axe d'articulation 60 reliant une première extrémité 58.1 de la bielle 58 à une première chape 62 du moteur d'aéronef 52 et au moins un deuxième axe d'articulation 64 reliant une deuxième extrémité 58.2 de la bielle 58 à une première chape 66 du corps d'attache 56.

La structure primaire 50 comprend au moins une première face de contact F50 contre laquelle est plaquée au moins une deuxième face de contact F56 du corps d'attache 56. Les première et deuxième faces de contact F50 et F56 sont disposées dans des plans verticaux approximativement perpendiculaires à la direction longitudinale.

L'attache-moteur avant 54 comprend une liaison de corps d'attache 68, reliant le corps d'attache 56 et une partie de la structure primaire 50, permettant de maintenir les première et deuxième faces de contact F50 et F56 plaquées l'une contre l'autre. Cette liaison du corps d'attache 68 comprend plusieurs éléments de liaison 70, comme des boulons par exemple, et au moins un pion de cisaillement 72. La partie de la structure primaire 50 peut être une pièce rapportée sur la structure primaire 50.

Selon une configuration visible par exemple sur la figure 4, la structure primaire 50 comprend deux pattes de fixation 74 présentant des faces coplanaires qui forment la première face de contact F50 et qui s'étendent dans un plan sensiblement vertical perpendiculaire à la direction longitudinale, de part et d'autre de la structure primaire 50. Pour chaque patte de fixation 74, la liaison de corps d'attache 68 comprend deux éléments de liaison 70, 70' et un pion de cisaillement 72, les éléments de liaison 70, 70' étant disposés au-dessus et au-dessous du pion de cisaillement 72.

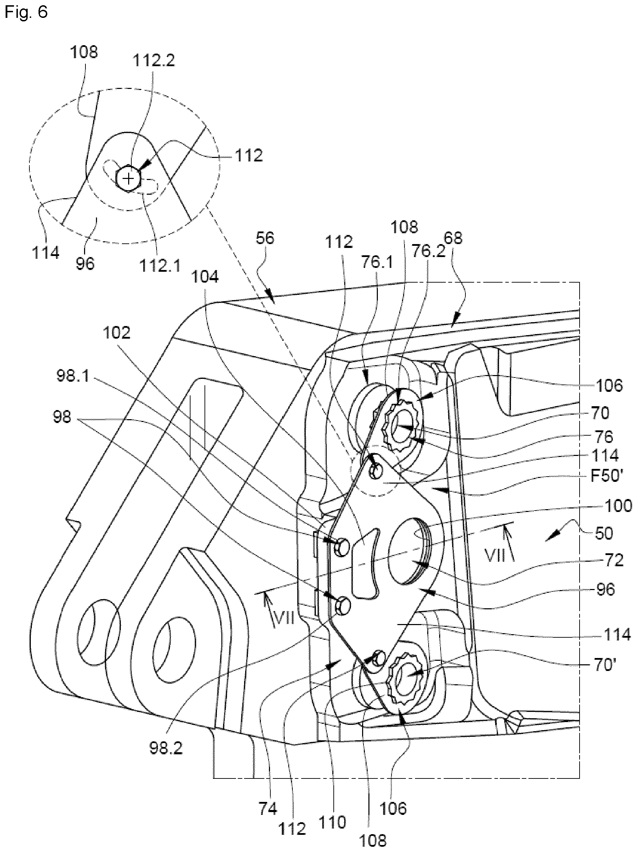

Selon un mode de réalisation, visible sur la figure 6, chaque élément de liaison 70, 70' est un boulon qui comporte une tête 76 présentant une section inférieure 76.1 circulaire et une section supérieure 76.2 polygonale.

Le corps d'attache 56, les bielles 58, les premier et deuxième axes d'articulation 60, 64, les éléments de liaison 70, 70' ne sont pas plus décrits car ils peuvent être identiques à ceux de l'art antérieur.

Chaque pion de cisaillement 72 comprend un corps cylindrique 78 qui présente une première extrémité 78.1 dite libre, de préférence arrondie et une deuxième extrémité 78.2 (opposée à la première extrémité) ainsi qu'une collerette 80 positionnée au niveau de la deuxième extrémité 78.2 du corps cylindrique 78. La collerette 80 présente deux faces planes perpendiculaires à l'axe du corps cylindrique 78 et un diamètre D80 supérieur au diamètre du corps cylindrique 78.

Pour chaque pion de cisaillement 72, la structure primaire 50 comprend un premier trou 82 traversant, présentant une première extrémité débouchant au niveau de la première face de contact F50 et une deuxième extrémité débouchant au niveau d'une face d'accès F50'. Le corps d'attache 56 comprend un deuxième trou 84 traversant, les premier et deuxième trous 82 et 84 étant configurés pour loger le corps cylindrique 78 du pion de cisaillement 72.

Selon une première configuration, les premier et deuxième trous 82, 84 ont un diamètre sensiblement identique (au jeu d'assemblage près) au diamètre D78 du corps cylindrique 78 du pion de cisaillement 72.

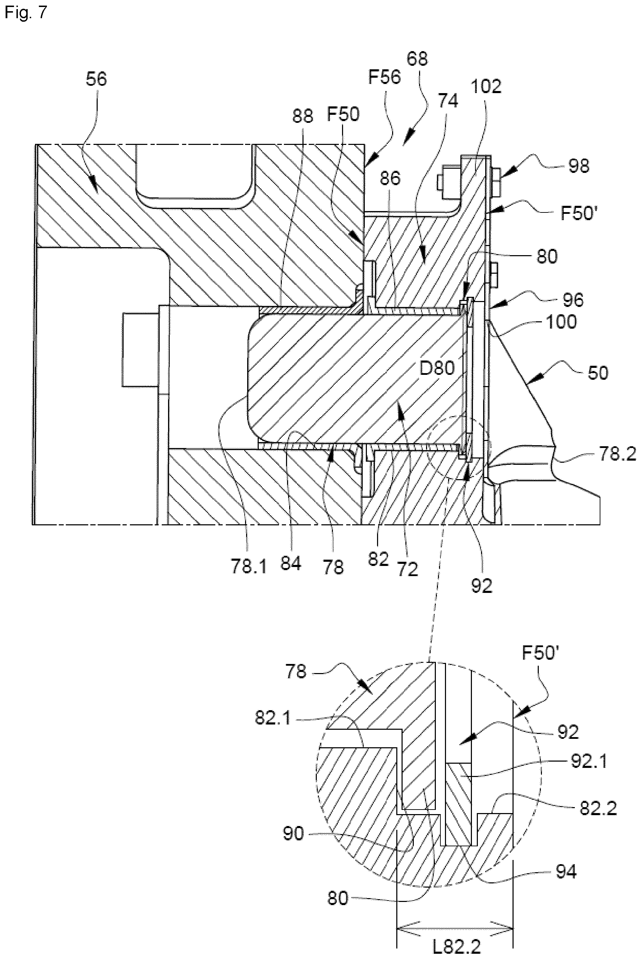

Selon un mode de réalisation visible sur la figure 7, une première bague coulissante 86 est intercalée entre le premier trou 82 et le corps cylindrique 78 et/ou une deuxième bague coulissante 88 est intercalée entre le deuxième trou 84 et le corps cylindrique 78.

La liaison de corps d'attache 68 comprend un système d'immobilisation en translation du corps cylindrique 78 du pion de cisaillement 72 à cheval dans les premier et deuxième trous 82, 84.

Par à cheval, on entend qu'un premier tronçon du pion de cisaillement 72 est positionné dans le premier trou 82 et qu'un deuxième tronçon du pion de cisaillement 72 est positionné dans le deuxième trou 84.

Le système d'immobilisation en translation comprend un épaulement 90 à proximité de la deuxième extrémité du premier trou 82 qui forme une surface d'appui contre laquelle prend appui l'une des faces de la collerette 80 en fonctionnement. Cet épaulement 90 est sensiblement perpendiculaire à l'axe du premier trou 82. Selon une configuration, le premier trou 82 comprend un tronçon principal 82.1 qui s'étend de la face de contact F50 jusqu'à l'épaulement 90 et un tronçon élargi 82.2 qui s'étend de l'épaulement 90 jusqu'à la face d'accès F50'. Le tronçon élargi 82.2 a un diamètre supérieur à celui du tronçon principal 82.1 et au diamètre D80 de la collerette 80 de sorte que cette dernière se loge dans le tronçon élargi 82.2 et prenne appui contre l'épaulement 90 en fonctionnement.

Le système d'immobilisation en translation comprend également une butée démontable 92, solidaire de la première structure 50, configurée pour immobiliser la collerette 80 entre l'épaulement 90 et la butée démontable 92. La butée démontable 92 est séparée de l'épaulement 90 d'une distance sensiblement égale à l'épaisseur de la collerette 80 (dimension prise parallèlement à l'axe du corps cylindrique 78 du pion de cisaillement 72). En fonctionnement, la collerette 80 est immobilisée entre l'épaulement 90 et la butée démontable 92. De ce fait, le pion de cisaillement 72 est immobilisé en translation dans les premier et deuxième trous 82, 84. L'épaulement 90 et la butée démontable 92 forment un premier système d'immobilisation en translation.

Selon un mode de réalisation, le tronçon élargi 82.2 comprend une gorge 94 qui s'étend entre deux plans perpendiculaires à l'axe du premier trou 82 et sur toute la circonférence du premier trou 82. Cette gorge 94 est séparée de l'épaulement 90 d'une distance sensiblement égale à l'épaisseur de la collerette 80. En complément, la butée démontable 92 est un circlips 92.1 qui se loge dans la gorge 94.

La liaison de corps d'attache 68 comprend un deuxième système d'immobilisation en translation du pion de cisaillement 72. Ce deuxième système d'immobilisation en translation comprend une plaque d'obturation 96, plaquée contre la face d'accès F50', reliée par au moins une liaison démontable 98 à la structure primaire 50, qui ferme au moins partiellement le premier trou 82.

Pour réduire sa masse, la plaque d'obturation 96 comprend un orifice 100 au droit du premier trou 82 qui a un diamètre inférieur au diamètre D80 de la collerette 80. En fonctionnement, lorsque la plaque d'obturation 96 est fixée à la structure primaire, l'orifice 100 est coaxial au premier trou 82.

Selon un mode de réalisation, la liaison démontable 98 comprend deux éléments de fixation 98.1, 98.2 qui présentent chacun une vis. Pour chaque élément de fixation 98.1, 98.2, la plaque d'obturation 96 présente un orifice de passage dont le diamètre est légèrement supérieur à celui de la tige de l'élément de fixation 98.1, 98.2. En complément, pour chaque plaque d'obturation 96, la structure primaire 50 comprend une extension 102 traversée par chaque liaison démontable 98. Ainsi, l'extension 102 présente un trou de passage pour chaque élément de fixation 98.1, 98.2. Chaque élément de fixation 98.1, 98.2 est un boulon et comprend, en plus de la vis, un écrou. Cette configuration permet de relier la plaque d'obturation 96 à la structure primaire 50 sans avoir besoin de tarauder un trou dans la structure primaire 50.

Selon un mode de réalisation visible sur la figure 6, la plaque d'obturation 96 comprend, en plus de l'orifice 100, au moins un évidement 104 pour réduire sa masse.

La liaison de corps d'attache 68 comprend au moins un système anti-rotation 106 pour au moins l'un des éléments de liaison 70, 70'. Selon une configuration, la liaison de corps d'attache 68 comprend un système anti-rotation 106 pour chaque élément de liaison 70, 70'. Selon un mode de réalisation, un système anti-rotation 106 comprend une plaque anti-rotation 108, qui présente un orifice traversant 110 qui a une section complémentaire à la section supérieure 76.2 de la tête 76 de l'élément de liaison 70, 70', ainsi qu'une liaison démontable 112 pour la relier directement ou indirectement à la structure primaire 50. Par complémentaire, on entend que lorsque la section supérieure 76.2 de la tête 76 est insérée dans l'orifice traversant 110, la plaque anti-rotation 108 et la tête 76 sont immobilisées en rotation l'une par rapport à l'autre.

La liaison démontable 112 comprend un premier trou de passage 112.1 de forme oblongue au niveau de la plaque anti-rotation 108 et un élément de fixation 112.2 comme un boulon par exemple. La forme oblongue du trou de passage 112.1 présente le même centre que l'orifice traversant 110 et permet de loger l'élément de fixation 112.2 en tolérant un léger débattement angulaire de la plaque anti-rotation 108.

Selon un mode de réalisation visible sur la figure 6, chaque plaque anti-rotation 108 est reliée à la plaque d'obturation 96 qui est elle-même reliée à la structure primaire 50. A cet effet, pour chaque plaque anti-rotation 108, la plaque d'obturation 96 comprend un prolongement 114 qui présente un orifice de passage pour l'élément de fixation 112.2 correspondant.

Le procédé de montage de l'attache-moteur 54 est le suivant :

Dans un premier temps, le corps d'attache 56 est relié au moteur d'aéronef 52 par les bielles 58.

En suivant, le moteur d'aéronef 52 est déplacé verticalement de manière à positionner les première et deuxième faces de contact F50 et F56 l'une en face de l'autre. Les trous de passage des éléments de liaison 70, 70' sont alignés par exemple en insérant des pions de centrage dans les premiers et deuxièmes trous 82, 84 destinés aux pions de cisaillement.

Les éléments de liaison 70, 70' sont mis en place. En suivant, les pions de centrage sont retirés et les pions de cisaillement 72 sont insérés dans les premiers et deuxièmes trous 82, 84 jusqu'à ce que pour chacun d'eux la collerette 80 soit en appui contre l'épaulement 90. Pour chaque pion de cisaillement 72, le circlips 92.1 est mis en place dans la gorge 94 du tronçon élargi 82.2 du premier trou 82.

Pour chaque élément de liaison 70, 70', la plaque anti-rotation 108 est mise en place. En suivant, pour chaque pion de cisaillement 72, la plaque d'obturation 96 est positionnée puis les éléments de fixation 98.1, 98.2 sont mis en place pour relier la plaque d'obturation 96 à la structure primaire 50. Enfin, chaque plaque anti-rotation 108 est reliée à la plaque d'obturation 96 grâce aux éléments de fixation 112.2.

Pour le démontage, les étapes précédentes sont reproduites en sens inverse.

Selon ce procédé de montage, chaque pion de cisaillement 72 et ses systèmes d'immobilisation sont mis en place à partir seulement de la face d'accès F50'. Ainsi, l'espacement entre le corps d'attache 56 et le moteur d'aéronef 52 peut être très réduit à l'avant du corps d'attache 56.

## Revendications

1. Attache-moteur d'aéronef comprenant un corps d'attache (56) relié à une structure primaire (50) d'un mât d'aéronef par une liaison de corps d'attache (68) comportant des éléments de liaison (70, 70') et au moins un pion de cisaillement (72) qui comprend un corps cylindrique (78) et une collerette (80) présentant un diamètre (D80) supérieur à celui du corps cylindrique (78), la liaison de corps d'attache (68) comprenant, pour chaque pion de cisaillement (72), un premier trou (82) dans la structure primaire (50) et un deuxième trou (84) dans le corps d'attache (56) configurés pour loger le pion de cisaillement (72), le premier trou (82) comportant un épaulement (90) contre lequel prend appui la collerette (80) en fonctionnement de manière à ce que le corps cylindrique (78) soit positionné à cheval dans les premier et deuxième trous (82, 84), **caractérisée en ce que** la liaison de corps d'attache (68) comprend :
- un premier système d'immobilisation qui comporte, en plus de l'épaulement (90), une butée démontable (92), solidaire de la structure primaire (50), configurée pour immobiliser la collerette (80) entre l'épaulement (90) et la butée démontable (92), et
- un deuxième système d'immobilisation qui comporte une plaque d'obturation (96), reliée par au moins une liaison démontable (98) à la structure primaire (50), qui ferme au moins partiellement le premier trou (82).

2. Attache-moteur d'aéronef selon la revendication 1, **caractérisée en ce que** la plaque d'obturation (96) comprend un orifice (100) qui a un diamètre inférieur au diamètre (D80) de la collerette (80), positionné au droit du premier trou (82) lorsque la plaque d'obturation (96) est reliée à la structure primaire (50).

3. Attache-moteur d'aéronef selon la revendication précédente, **caractérisée en ce que**, pour chaque plaque d'obturation (96), la structure primaire (50) comprend une extension (102) traversée par chaque liaison démontable (98).

4. Attache-moteur d'aéronef selon la revendication précédente, **caractérisée en ce que** la liaison démontable (98) comprend deux éléments de fixation (98.1, 98.2), chacun d'eux se logeant dans des trous de passage de la plaque d'obturation (96) et de l'extension (102).

5. Attache-moteur d'aéronef selon la revendication précédente, **caractérisée en ce que** la plaque d'obturation (96) comprend, en plus de l'orifice (100), un évidement (104).

6. Attache-moteur d'aéronef selon l'une des revendications précédentes, **caractérisée en ce que** la liaison de corps d'attache (68) comprend au moins un système anti-rotation (106) pour au moins l'un des éléments de liaison (70, 70'), chaque système anti-rotation comportant une plaque anti-rotation (108) qui présente un orifice traversant (110) avec une section complémentaire à une section (76.2) d'une tête (76) de l'élément de liaison (70, 70') de sorte que la plaque anti-rotation (108) et la tête soient immobilisées en rotation l'une par rapport à l'autre, ainsi qu'une liaison démontable (112) pour relier ladite plaque anti-rotation (108) à la structure primaire (50).

7. Attache-moteur selon la revendication précédente, **caractérisée en ce que** chaque plaque anti-rotation (108) est reliée à la plaque d'obturation (96).

8. Attache-moteur selon la revendication précédente, **caractérisée en ce que**, pour chaque plaque anti-rotation (108), la plaque d'obturation (96) comprend un prolongement (114) qui présente un orifice de passage pour un élément de fixation (112.2) reliant la plaque anti-rotation (108) et la plaque d'obturation (96).

9. Procédé de montage d'une attache-moteur selon l'une des revendications précédentes, comprenant les étapes visant à :
- relier le corps d'attache (56) au moteur d'aéronef (52),
- déplacer verticalement le moteur d'aéronef (52) de manière à positionner des première et deuxième faces de contact (F50, F56) de la structure primaire du mât d'aéronef et du corps d'attache (56) en face l'une de l'autre,
- mettre en place les éléments de liaison (70, 70'),
- insérer chaque pion de cisaillement (72) dans les premier et deuxième trous (82, 84) jusqu'à ce que la collerette (80) soit en contact avec l'épaulement (90),
**caractérisé en ce que** le procédé comprend aussi les étapes suivantes
- mettre en place la butée démontable (92), et
- positionner une plaque d'obturation (96) et la relier à la structure primaire (50) de manière à fermer au moins partiellement le premier trou (82).

10. Aéronef comprenant une attache-moteur selon l'une des revendications 1 à 8.

## Patentansprüche

1. Flugzeugtriebwerksaufhängung, welche einen Befestigungskörper (56) umfasst, der mit einer Primärstruktur (50) eines Flugzeugpylons durch eine Befestigungskörperverbindung (68) verbunden ist, die Verbindungselemente (70, 70') und wenigstens einen Scherstift (72) aufweist, welcher einen zylindrischen Körper (78) und einen Flansch (80), der einen Durchmesser (D80) aufweist, der größer als derjenige des zylindrischen Körpers (78) ist, umfasst, wobei die Befestigungskörperverbindung (68) für jeden Scherstift (72) ein erstes Loch (82) in der Primärstruktur (50) und ein zweites Loch (84) im Befestigungskörper (56) umfasst, die dafür ausgelegt sind, den Scherstift (72) aufzunehmen, wobei das erste Loch (82) einen Absatz (90) umfasst, an welchem sich der Flansch (80) im Betrieb abstützt, so dass der zylindrische Körper (78) aufsitzend im ersten und im zweiten Loch (82, 84) positioniert ist, **dadurch gekennzeichnet, dass** die Befestigungskörperverbindung (68) umfasst:
- ein erstes Fixierungssystem, welches zusätzlich zu dem Absatz (90) einen mit der Primärstruktur (50) fest verbundenen lösbaren Anschlag (92) aufweist, der dafür ausgelegt ist, den Flansch (80) zwischen dem Absatz (90) und dem lösbaren Anschlag (92) zu fixieren, und
- ein zweites Fixierungssystem, welches eine durch wenigstens eine lösbare Verbindung (98) mit der Primärstruktur (50) verbundene Verschlussplatte (96) aufweist, welche das erste Loch (82) wenigstens teilweise verschließt.

2. Flugzeugtriebwerksaufhängung nach Anspruch 1, **dadurch gekennzeichnet, dass** die Verschlussplatte (96) eine Öffnung (100) umfasst, welche einen Durchmesser aufweist, der kleiner als der Durchmesser (D80) des Flansches (80) ist, und genau gegenüber dem ersten Loch (82) positioniert ist, wenn die Verschlussplatte (96) mit der Primärstruktur (50) verbunden ist.

3. Flugzeugtriebwerksaufhängung nach dem vorhergehenden Anspruch, **dadurch gekennzeichnet, dass** für jede Verschlussplatte (96) die Primärstruktur (50) eine Erweiterung (102) umfasst, die von jeder lösbaren Verbindung (98) durchquert wird.

4. Flugzeugtriebwerksaufhängung nach dem vorhergehenden Anspruch, **dadurch gekennzeichnet, dass** die lösbare Verbindung (98) zwei Befestigungselemente (98.1, 98.2) umfasst, die jeweils in Durchgangslöchern der Verschlussplatte (96) und der Erweiterung (102) aufgenommen werden.

5. Flugzeugtriebwerksaufhängung nach dem vorhergehenden Anspruch, **dadurch gekennzeichnet, dass** die Verschlussplatte (96) zusätzlich zur Öffnung (100) eine Aussparung (104) umfasst.

6. Flugzeugtriebwerksaufhängung nach einem der vorhergehenden Ansprüche, **dadurch gekennzeichnet, dass** die Befestigungskörperverbindung (68) wenigstens ein Verdrehsicherungssystem (106) für wenigstens eines der Verbindungselemente (70, 70') umfasst, wobei jedes Verdrehsicherungssystem eine Verdrehsicherungsplatte (108) umfasst, welche eine durchgehende Öffnung (110) mit einem Querschnitt aufweist, der zu einem Querschnitt (76.2) eines Kopfes (76) des Verbindungselements (70, 70') komplementär ist, so dass die Verdrehsicherungsplatte (108) und der Kopf (76) gegen Verdrehung relativ zueinander gesichert sind, sowie eine lösbare Verbindung (112) zum Verbinden der Verdrehsicherungsplatte (108) mit der Primärstruktur (50).

7. Triebwerksaufhängung nach dem vorhergehenden Anspruch, **dadurch gekennzeichnet, dass** jede Verdrehsicherungsplatte (108) mit der Verschlussplatte (96) verbunden ist.

8. Triebwerksaufhängung nach dem vorhergehenden Anspruch, **dadurch gekennzeichnet, dass** für jede Verdrehsicherungsplatte (108) die Verschlussplatte (96) eine Verlängerung (114) umfasst, welche eine Durchgangsöffnung für ein Befestigungselement (112.2) aufweist, das die Verdrehsicherungsplatte (108) und die Verschlussplatte (96) verbindet.

9. Verfahren zur Montage einer Triebwerksaufhängung nach einem der vorhergehenden Ansprüche, welches die Schritte umfasst zum:
- Verbinden des Befestigungskörpers (56) mit dem Flugzeugtriebwerk (52),
- vertikalen Verlagern des Flugzeugtriebwerks (52), um so eine erste und eine zweite Kontaktfläche (F50, F56) der Primärstruktur des Flugzeugpylons und des Befestigungskörpers (56) einander gegenüberliegend zu positionieren,
- Anbringen der Verbindungselemente (70, 70'),
- Einsetzen jedes Scherstiftes (72) in das erste und das zweite Loch (82, 84), bis sich der Flansch (80) in Kontakt mit dem Absatz (90) befindet,
**dadurch gekennzeichnet, dass** das Verfahren außerdem die folgenden Schritte umfasst:
- Anbringen des lösbaren Anschlags (92) und
- Positionieren einer Verschlussplatte (96) und Verbinden derselben mit der Primärstruktur (50), um so das erste Loch (82) wenigstens teilweise zu verschließen.

10. Flugzeug, welches eine Triebwerksaufhängung nach einem der Ansprüche 1 bis 8 umfasst.

## Claims

1. Aircraft engine mount comprising a mounting body (56) connected to a primary structure (50) of an aircraft pylon by a mounting body connection (68) comprising connecting elements (70, 70') and at least one shear pin (72) which comprises a cylindrical body (78) and a collar (80) having a diameter (D80) that is greater than that of the cylindrical body (78), the mounting body connection (68) comprising, for each shear pin (72), a first hole (82) in the primary structure (50) and a second hole (84) in the mounting body (56), these being configured to accommodate the shear pin (72), the first hole (82) comprising a shoulder (90) against which the collar (80) bears in operation in such a way that the cylindrical body (78) is positioned astride in the first and second holes (82, 84), **characterized in that** the mounting body connection (68) comprises:
- a first immobilizing system which comprises, in addition to the shoulder (90), a removable stop (92) that is secured to the primary structure (50) and is configured to immobilize the collar (80) between the shoulder (90) and the removal stop (92), and
- a second immobilizing system which comprises a closure plate (96) that is connected by at least one removable connection (98) to the primary structure (50), which at least partially closes the first hole (82).

2. Aircraft engine mount according to Claim 1, **characterized in that** the closure plate (96) comprises an orifice (100) having a diameter smaller than the diameter (D80) of the collar (80), this orifice being positioned in line with the first hole (82) when the closure plate (96) is connected to the primary structure (50).

3. Aircraft engine mount according to the preceding claim, **characterized in that**, for each closure plate (96), the primary structure (50) comprises an extension (102) through which each removable connection (98) passes.

4. Aircraft engine mount according to the preceding claim, **characterized in that** the removable connection (98) comprises two attachment elements (98.1, 98.2), each one of these being accommodated in through-holes in the closure plate (96) and in the extension (102).

5. Aircraft engine mount according to the preceding claim, **characterized in that** the closure plate (96) comprises, in addition to the orifice (100), a cutout (104) .

6. Aircraft engine mount according to one of the preceding claims, **characterized in that** the mounting body connection (68) comprises at least one rotation prevention system (106) for at least one of the connecting elements (70, 70'), each rotation prevention system comprising a rotation prevention plate (108) that has a through-hole (110) whose cross section matches a cross section (76.2) of a head (76) of the connecting element (70, 70') such that the rotation prevention plate (108) and the head (76) are prevented from rotating with respect to one another, and a removable connection (112) for connecting said rotation prevention plate (108) to the primary structure (50).

7. Engine mount according to the preceding claim, **characterized in that** each rotation prevention plate (108) is connected to the closure plate (96).

8. Engine mount according to the preceding claim, **characterized in that**, for each rotation prevention plate (108), the closure plate (96) comprises an extension (114) which has a through-orifice for an attachment element (112.2) connecting the rotation prevention plate (108) and the closure plate (96).

9. Method for installing an engine mount according to one of the preceding claims, comprising the steps which have the objective of:
- connecting the mounting body (56) to the aircraft engine (52),
- moving the aircraft engine (52) and vertically so as to position first and second contact faces (F50, F56) of the primary structure of the aircraft pylon and of the mounting body (56) facing one another,
- putting in place the connecting elements (70, 70'),
- inserting each shear pin (72) into the first and second holes (82, 84) until the collar (80) is in contact with the shoulder (90), **characterized in that** the method also comprises the following steps:
- putting in place the removable stop (92), and
- positioning a closure plate (96) and connecting this to the primary structure (50) so as to at least partially close the first hole (82).

10. Aircraft comprising an engine mount according to one of Claims 1 to 8.
